# FASCICULE DE BREVET EUROPEEN

(11) **EP 0 570 314 B1**
(45) Date de publication et mention de la délivrance du brevet: **25.09.1996**
(21) Numéro de dépôt: 93440039.1
(22) Date de dépôt: 14.05.1993
(51) Int. Cl.: A01D 34/66, A01D 43/10, A01D 67/00

(54) **Machine de coupe, notamment faucheuse, s'adaptant aisément au relief du sol**
Maschine zum Schneiden, insbesondere Mähmaschine, die sich den Bodenunebenheiten leicht anpasst
Cutting machine, especially mower, which easily adapts to the relief of the ground

(30) Priorité: 14.05.1992 FR 9206017
(43) Date de publication de la demande: 18.11.1993
(73) Titulaire: KUHN S.A., F-67700 Saverne (FR)
(72) Inventeur: Walch, Martin, F-67490 Dettwiller (FR); Wattron, Bernard, F-67700 Haegen (FR)

(56) Documents cités:
- EP-A- 0 262 743
- EP-A- 0 361 573
- FR-A- 1 471 960

## Description

La présente invention concerne une machine de coupe comportant :
- une structure d'attelage destinée à être liée à l'attelage d'un véhicule moteur ;
- un mécanisme de coupe s'étendant au travail, transversalement à la direction de travail ;
- un premier dispositif de liaison liant le mécanisme de coupe à la structure d'attelage, ledit premier dispositif de liaison étant lié au mécanisme de coupe au moins sensiblement dans le voisinage d'une première extrémité longitudinale dudit mécanisme de coupe et autorisant le pivotement dudit mécanisme de coupe par rapport à la structure d'attelage autour d'un axe géométrique dirigé vers l'avant ;
- un premier organe de délestage servant à délester ladite première extrémité longitudinale du mécanisme de coupe ;
- une roue agencée dans le voisinage de la deuxième extrémité longitudinale du mécanisme de coupe et qui roule sur le sol au travail ;
- un deuxième dispositif de liaison liant ladite roue au mécanisme de coupe, ledit deuxième dispositif de liaison étant lié au mécanisme de coupe au moins sensiblement dans le voisinage de la deuxième extrémité longitudinale dudit mécanisme de coupe et autorisant un déplacement en hauteur du mécanisme de coupe par rapport à ladite roue ; et
- un deuxième organe de délestage servant à délester la deuxième extrémité longitudinale du mécanisme de coupe.

Dans la demande de brevet EP 0 361 573, il est décrit une telle faucheuse. La structure d'attelage de cette faucheuse connue est fixée à l'attelage trois points du tracteur et le groupe de fauche s'étend à côté de la voie du tracteur perpendiculairement à la direction de travail.

La première extrémité longitudinale du groupe de fauche est liée à la structure d'attelage au moyen d'un tourillon d'axe géométrique dirigé parallèlement à la direction de travail. De ce fait, le groupe de fauche est susceptible de pivoter par rapport à la structure d'attelage autour de l'axe géométrique dudit tourillon, afin de s'adapter au relief du sol. Un premier ressort, implanté entre la structure d'attelage et le groupe de fauche, déleste en sus ledit groupe de fauche en tendant à le faire pivoter autour dudit tourillon.

Le groupe de fauche s'appuie par ailleurs sur deux roues, chacune implantée derrière une extrémité longitudinale du groupe de fauche. L'axe de roulement de chaque roue est plus précisément lié au groupe de fauche par l'intermédiaire d'un parallélogramme déformable verticalement sur lequel agit un ressort. Ce dernier tend à déformer le parallélogramme de sorte à délester l'extrémité longitudinale correspondante du groupe de fauche.

Cette faucheuse connue présente plusieurs inconvénients.

Vu que le groupe de fauche de cette faucheuse connue est lié à la structure d'attelage au moyen d'un tourillon, laquelle structure d'attelage est liée rigidement à l'attelage du tracteur, le groupe de fauche ne peut s'adapter au relief du sol que par pivotement autour de l'axe géométrique dudit tourillon. Comme le déplacement en hauteur du groupe de fauche est de ce fait considérablement limité, l'adaptation du groupe de fauche au relief du sol est donc très imparfaite.

Compte tenu d'un tel agencement, la première extrémité longitudinale du groupe de fauche est en sus mal délestée.

Un inconvénient supplémentaire de cette faucheuse connue apparaît encore au niveau des roues qui sont dirigées suivant la direction de travail et situées très en retrait des roues arrière du tracteur. Ce faisant, les roues ripent sur le sol lorsque le conducteur du tracteur est amené à prendre des virages serrés.

La présente invention a pour but de remédier à ces inconvénients.

A cet effet, il est prévu selon l'invention, qu'au travail, le premier dispositif de liaison autorise en sus un déplacement en hauteur du mécanisme de coupe par rapport à la structure d'attelage et que la roue soit susceptible de pivoter autour d'un axe géométrique dirigé vers le haut.

De ce fait, les deux extrémités longitudinales du mécanisme de coupe peuvent se déplacer en hauteur et s'adapter rapidement au relief du sol indépendamment l'une de l'autre.

Grâce à cet agencement, le délestage du mécanisme de coupe est aussi mieux assuré.

En sus, étant donné que la roue de cette machine de coupe selon l'invention est susceptible de pivoter autour d'un axe géométrique dirigé vers le haut, ladite roue peut s'orienter suivant la direction de déplacement du mécanisme de coupe, ce qui rend la machine de coupe aisément manoeuvrable au travail.

Selon une caractéristique supplémentaire de l'invention, il est aussi prévu que le premier dispositif de liaison comporte un bras oscillant lié d'une part directement ou indirectement à la structure d'attelage au moyen d'une première liaison pivot et d'autre part au mécanisme de coupe au moyen d'une deuxième liaison pivot. Au travail, les axes géométriques de ces liaisons pivot sont dirigés vers l'avant.

Une bonne adaptation du mécanisme de coupe au relief du sol est obtenue lorsque lesdits axes géométriques sont au moins sensiblement parallèles entre eux et lorsqu'ils forment, en vue de dessus avec l'axe longitudinal du mécanisme de coupe, un angle compris entre 45° et 90°, avec de préférence environ 60°.

Il est également avantageux que l'axe géométrique de la deuxième liaison pivot s'étende au moins sensiblement à mi-hauteur du mécanisme de coupe.

Selon une autre caractéristique de l'invention, il est également prévu que le deuxième dispositif de liaison, au moyen duquel la roue est liée au mécanisme de coupe, comporte un organe de guidage de la roue et une structure déformable en hauteur. L'organe de guidage est articulé à ladite structure déformable au moyen d'une première articulation dont ledit axe géométrique est dirigé vers le haut et autour duquel est susceptible de pivoter la roue.

Une bonne adaptation du mécanisme de coupe au relief du sol est obtenue lorsque la structure déformable comporte une console, à laquelle est articulé l'organe de guidage au moyen de la première articulation, et qui est liée au mécanisme de coupe au moyen de deux bielles s'étendant au moins sensiblement orthogonalement à l'axe longitudinal dudit mécanisme de coupe.

Dans ce cas, il est également avantageux que la structure déformable forme, avec une partie du mécanisme de coupe, au moins sensiblement un parallélogramme déformable.

Afin d'implanter la roue dans le proche voisinage de la console, il est intéressant que la console s'étende vers l'arrière et vers le haut, et que la première articulation soit implantée à la partie supérieure de ladite console.

Selon une caractéristique très intéressante de l'invention, il est par ailleurs prévu que le premier organe de délestage soit lié au premier dispositif de liaison. Le premier organe de délestage peut par exemple s'étendre entre le premier dispositif de liaison et le mécanisme de coupe.

Selon une autre caractéristique très intéressante de l'invention, il est aussi prévu que le deuxième organe de délestage soit lié au deuxième dispositif de liaison.

Dans les réalisations où le deuxième dispositif de liaison comporte une console et deux bielles, le deuxième organe de délestage peut s'étendre entre la console et la bielle supérieure de cette structure déformable.

De cette sorte, les deux organes de délestage agissent sur les dispositifs de liaison afin de délester le mécanisme de coupe.

Il est en sus particulièrement avantageux que l'un au moins des deux organes de délestage comporte un ressort à gaz. En effet, les ressorts à gaz présentent généralement un encombrement réduit et leur effort de délestage peut être aisément mesuré et réglé.

Sur la machine de récolte selon l'invention, il est encore prévu au moins un organe de levage du mécanisme de coupe, afin de lever ledit mécanisme de coupe au moins sensiblement parallèlement au-dessus du sol.

Une solution intéressante consiste à munir chaque dispositif de liaison d'un organe de levage respectif, voire à combiner chaque organe de délestage avec un organe de levage correspondant.

Selon une autre caractéristique supplémentaire de l'invention, il est en sus prévu :
- que le pivotement de la roue autour de l'axe géométrique d'une première articulation peut être condamné au moyen d'un premier dispositif de verrouillage, et
- que le premier dispositif de liaison comporte une deuxième articulation présentant un axe géométrique dirigé vers le haut.

Le mécanisme de coupe peut être amené d'une position de travail dans laquelle son axe longitudinal s'étend transversalement à la direction de travail, dans une position de transport dans laquelle son axe longitudinal s'étend au moins sensiblement parallèlement à la direction de transport, par pivotement autour de l'axe géométrique de ladite deuxième articulation.

Le pivotement du mécanisme de coupe autour de l'axe géométrique de la deuxième articulation est condamnable par un deuxième dispositif de verrouillage, de sorte :
* qu'au travail, le deuxième dispositif de verrouillage condamne le pivotement du mécanisme de coupe autour de l'axe géométrique de la deuxième articulation, tandis que la roue est susceptible de pivoter autour de l'axe géométrique de la première articulation, alors
* qu'au transport, le premier dispositif de verrouillage condamne le pivotement de la roue autour de l'axe géométrique de la première articulation, tandis que le mécanisme de coupe est susceptible de pivoter autour de l'axe géométrique de la deuxième articulation.

Dans la réalisation où le premier dispositif de liaison comporte un bras oscillant, la deuxième articulation peut être prévue entre la structure d'attelage et la première liaison pivot du bras oscillant. De ce fait, c'est tout le corps, composé des deux dispositifs de liaison du mécanisme de coupe et de la roue, qui est susceptible de pivoter autour de l'axe géométrique de la deuxième articulation.

Avantageusement, l'axe géométrique de ladite deuxième articulation peut être au moins sensiblement parallèle à l'axe géométrique de la première articulation.

Le pivotement du mécanisme de coupe de sa position de transport vers sa position de travail, autour de l'axe géométrique de la deuxième articulation, est réalisé sous l'action d'un organe de manoeuvre.

Le deuxième dispositif de verrouillage est, en partie au moins, constitué par ledit organe de manoeuvre.

Le premier dispositif de verrouillage, quant à lui, comporte un organe d'orientation servant, en vue du transport, à orienter la roue suivant la direction de transport sous l'action d'un organe de positionnement.

L'organe de positionnement est destiné à agir par l'intermédiaire de l'organe d'orientation sur un levier lié rigidement à l'organe de guidage de la roue et présentant deux butées implantées de part et d'autre de l'axe géométrique de la première articulation.

Préférentiellement, le contact entre le levier et l'organe d'orientation est réalisé au moyen d'au moins un galet tournant autour d'un axe au moins sensiblement parallèle à l'axe géométrique de la première articulation, autour de laquelle la roue est susceptible de pivoter.

Au travail, la roue s'étend derrière une partie au moins des organes de travail tandis qu'au transport la roue s'étend dans le prolongement du mécanisme de coupe.

En outre, il est encore prévu que la structure d'attelage comporte trois points d'attelage destinés à être liés aux trois points d'attelage du dispositif d'attelage d'un véhicule moteur.

Selon une caractéristique supplémentaire de l'invention, il est d'autre part prévu que l'organe de manoeuvre soit constitué par au moins un vérin.

Ce vérin de manoeuvre peut être en liaison d'entraînement avec le premier dispositif de liaison.

A cet effet, le vérin de manoeuvre peut avantageusement comporter deux cylindres s'étendant dans le prolongement l'un de l'autre et fixés à la structure d'attelage, et deux pistons, chacun monté de manière coulissante dans le cylindre correspondant ; alors que la liaison d'entraînement peut être réalisée au moyen d'une crémaillère implantée entre lesdits pistons ; ladite crémaillère engrènant avec un secteur denté qui est lié au premier dispositif de liaison et qui est centré sur l'axe géométrique de la deuxième articulation.

Dans certaines réalisations, il est avantageux d'utiliser un vérin de manoeuvre hydraulique.

De même, l'organe de positionnement peut comporter au moins un vérin hydraulique.

L'invention trouve une application particulièrement intéressante dans le domaine des faucheuses avec ou sans organes de traitement du produit coupé.

D'autres caractéristiques de l'invention apparaissent dans la description suivante d'un exemple non limitatif de réalisation de l'invention faite en référence au dessin annexé sur lequel :
- la figure 1 représente une vue de dessus d'une machine de coupe selon l'invention liée à un tracteur agricole et placée dans la position de travail ;
- la figure 2 représente, dans la position de travail de la figure 1, une coupe de l'organe de manoeuvre montrant la crémaillère qui engrène avec le secteur denté ;
- la figure 3 représente, dans la position de transport, une coupe partielle de la structure d'attelage et d'une partie du premier dispositif de liaison ;
- la figure 4 représente une vue de dessus de la machine de coupe placée dans la position de transport ;
- la figure 5 représente une vue latérale arrière de la machine de coupe sans organes de protection suivant la flèche V définie sur la figure 1 ;
- la figure 6 représente une vue latérale de la machine de coupe sans organes de protection suivant la flèche VI définie sur la figure 1 ;
- la figure 7 représente, en coupe, un organe de délestage et de levage dans sa position de travail ; et
- la figure 8 représente, en coupe, l'organe de délestage et de levage de la figure 7 dans sa position de transport.

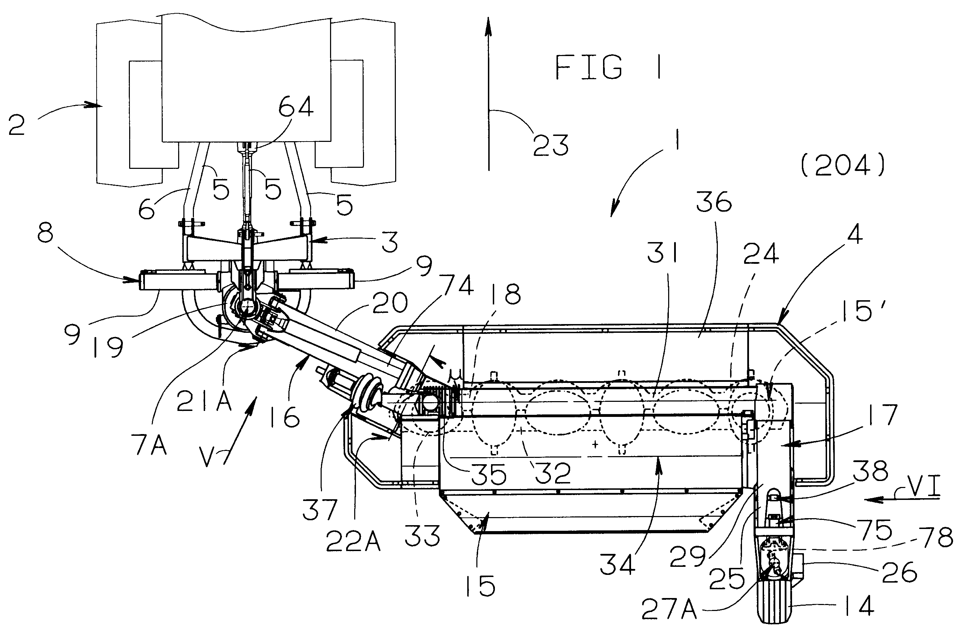

Les figures 1 à 8 représentent une faucheuse (1) selon l'invention. Celle-ci est attelée à un tracteur agricole (2).

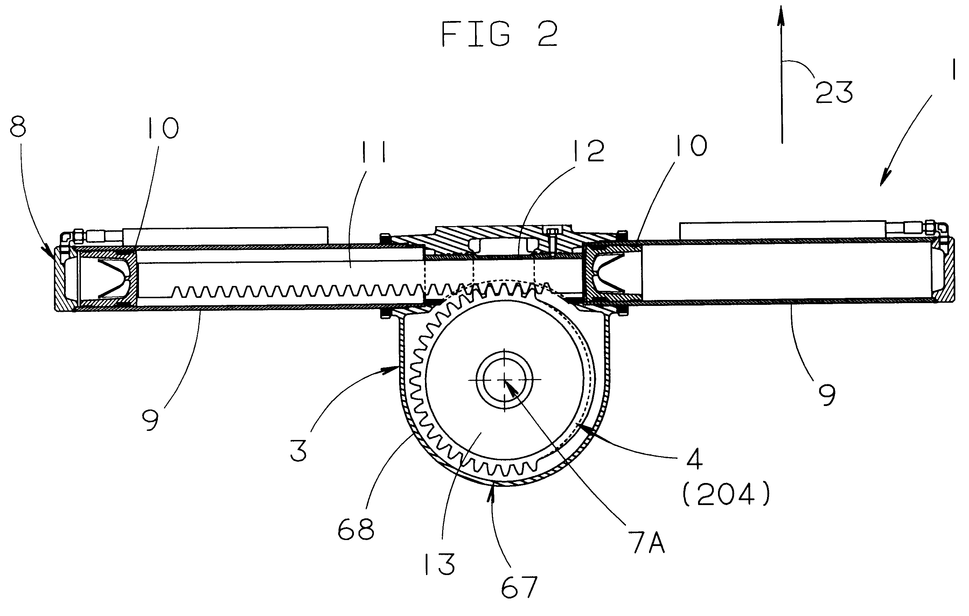

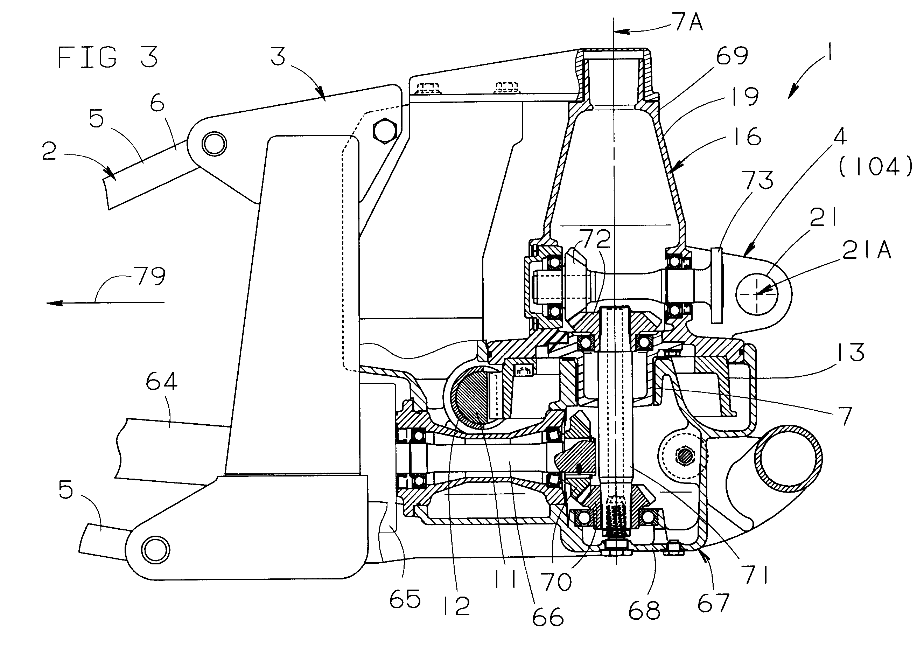

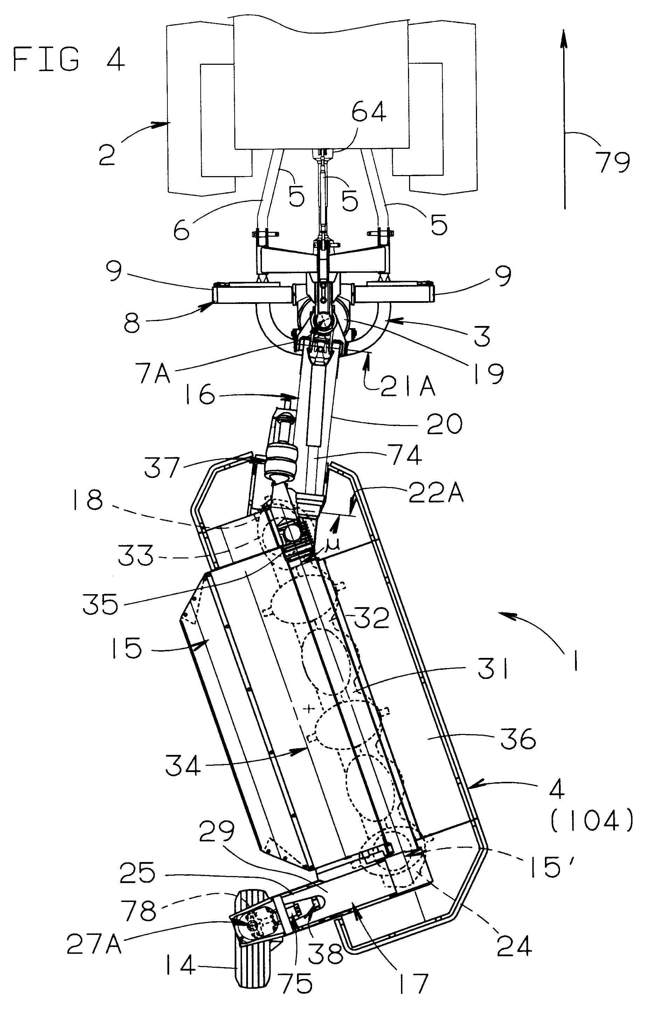

La faucheuse (1) se compose principalement d'une structure d'attelage (3) et d'un corps (4). La structure d'attelage (3) est destinée à être liée, à sa partie frontale, aux trois points (5) du dispositif de relevage (6) du tracteur (2). Le corps (4) est lié à la structure d'attelage (3) au moyen d'une articulation cylindrique (7) (figure 3) d'axe géométrique (7A) au moins sensiblement vertical. La position angulaire du corps (4) par rapport à la structure d'attelage (3) peut être modifiée en faisant pivoter le corps (4) autour dudit axe géométrique (7A). La mise dans la position angulaire souhaitée est réalisée sous l'action d'un vérin de manoeuvre (8) comprenant deux cylindres (9) fixés à la structure d'attelage (3). Les deux cylindres (9) sont au moins sensiblement identiques et s'étendent horizontalement dans le prolongement l'un de l'autre. A l'intérieur de chaque cylindre (9) du vérin de manoeuvre (8) est prévu un piston (10) (figure 2) monté de manière coulissante dans ledit cylindre (9). Entre les deux pistons (10) est implantée une crémaillère (11) guidée au moyen d'une pièce de guidage (12) placée au dos de ladite crémaillère (11). De cette sorte, la crémaillère (11) peut uniquement être translatée dans les cylindres (9) sous l'action de l'huile qui alimente l'une des extrémités longitudinales du vérin de manoeuvre (8), afin d'engréner avec un secteur denté (13) qui est centré sur l'axe géométrique (7A) et solidaire du corps (4) de la faucheuse (1) (figure 3). Grâce à cet agencement, le corps (4) peut être pivoté autour dudit axe géométrique (7A) sous l'action du vérin de manoeuvre (8), pour être amené de sa position de transport (104), où il s'étend au moins sensiblement dans la voie du tracteur (2) (figures 3 et 4), dans une position de travail (204), où il s'étend au moins sensiblement à côté de la voie du tracteur (2) (figures 1 et 2). Lorsque le corps (4) est dans sa position de travail (204), on empêche l'huile de s'écouler du vérin de manoeuvre (8), ce qui a pour effet de condamner le pivotement dudit corps (4) autour de l'axe géométrique (7A). A l'inverse, au transport, on met en communication les deux chambres extérieures du vérin de manoeuvre (8), afin d'autoriser un libre pivotement du corps (4) autour de l'axe géométrique (7A). De ce fait, les manoeuvres au transport de la faucheuse (1) sont considérablement simplifiées.

Le corps (4) de la faucheuse (1) s'appuie sur le sol au moyen d'une seule roue (14) implantée à l'extrémité longitudinale du corps (4) éloignée de la structure d'attelage (3). Le corps (4) comporte principalement un mécanisme de récolte (15) et deux dispositifs de liaison (16, 17).

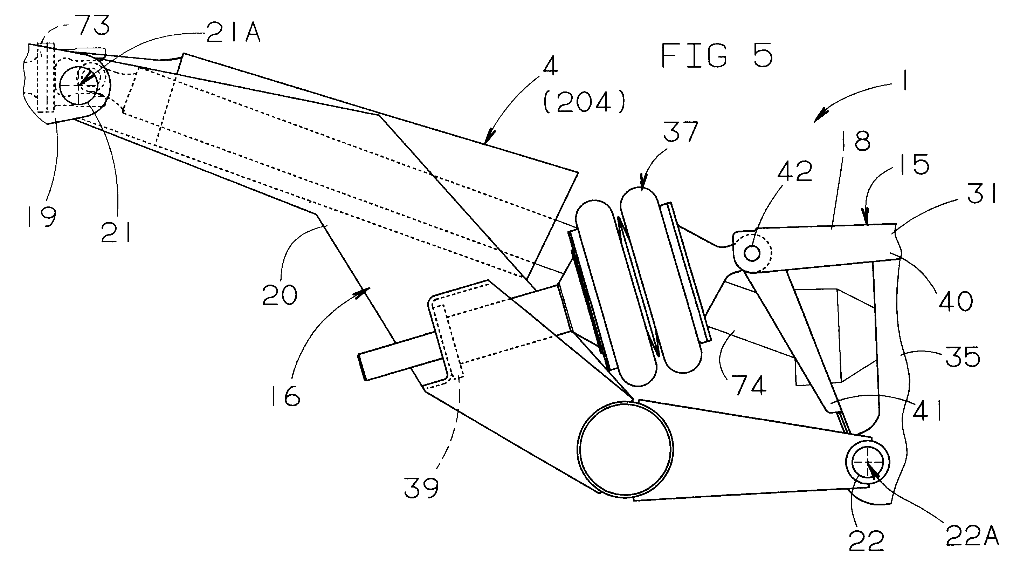

Le premier dispositif de liaison (16) qui est représenté en détail sur les figures 3 et 5, lie la première extrémité longitudinale (18) du mécanisme de récolte (15) à la structure d'attelage (3). A cet effet, le premier dispositif de liaison (16) se compose d'une tête d'attelage (19) montée pivotante autour de l'axe géométrique (7A) de la structure d'attelage (3) et d'un bras oscillant (20) liant le mécanisme de récolte (15) à ladite tête d'attelage (19). Grâce à ce bras oscillant (20) la première extrémité longitudinale (18) peut se déplacer en hauteur de manière importante par rapport à la structure d'attelage (3) afin de s'adapter au relief du terrain. Ce bras oscillant (20) est plus précisément lié à l'une de ses extrémités à la tête d'attelage (19) au moyen d'une première liaison pivot (21). L'axe géométrique (21A) de la première liaison pivot (21) s'étend au moins sensiblement orthogonalement à l'axe longitudinal du bras oscillant (20) et à l'axe géométrique (7A). A son autre extrémité, le bras oscillant (20) est lié au mécanisme de récolte (15) au moyen d'une deuxième liaison pivot (22) d'axe géométrique (22A) au moins sensiblement parallèle à l'axe géométrique (21A) de la première liaison pivot (21). Du reste, l'axe géométrique (22A) de la deuxième liaison pivot (22) s'étend, vu suivant la direction de travail (23) au moins sensiblement à mi-hauteur du mécanisme de récolte (15) et forme, en vue de dessus, un angle (µ) d'environ 60° avec l'axe longitudinal (15') dudit mécanisme de récolte (15).

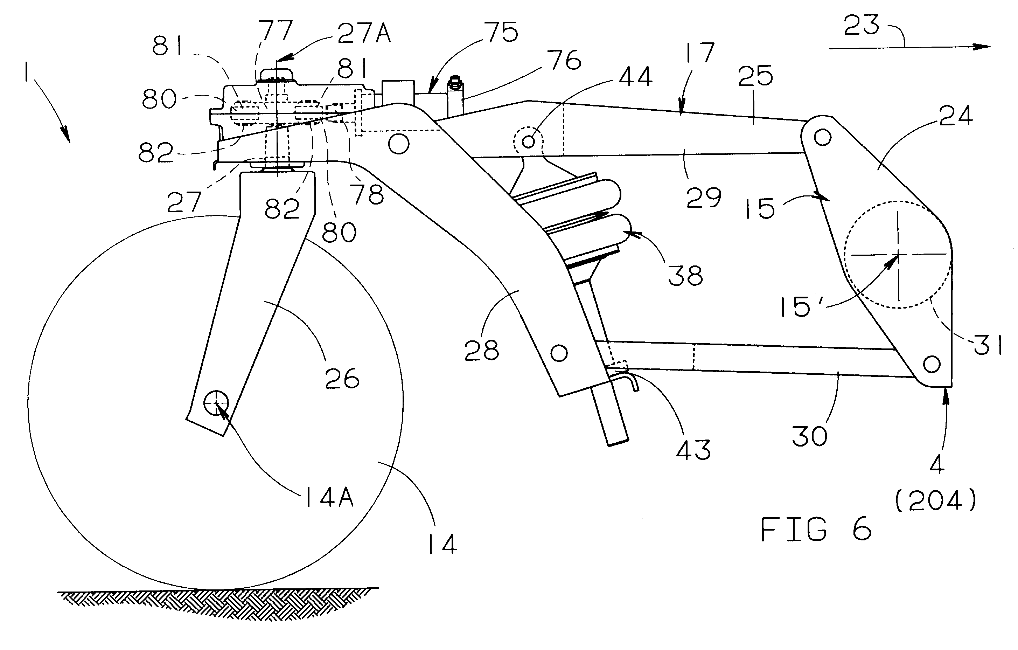

Le deuxième dispositif de liaison (17) (figure 6) lie la deuxième extrémité longitudinale (24) du mécanisme de récolte (15) à la roue (14). Ce deuxième dispositif de liaison (17) se compose d'un quadrilatère déformable (25) et d'un organe de guidage (26) de la roue (14). Le quadrilatère déformable (25) s'étend, en vue de dessus, au moins sensiblement orthogonalement à l'axe longitudinal (15') du mécanisme de récolte (15) et l'organe de guidage (26) de la roue (14) est lié au quadrilatère déformable (25) au moyen d'une articulation cylindrique (27) d'axe géométrique (27A) au moins sensiblement vertical. Grâce à cet agencement, la deuxième extrémité longitudinale (24) du mécanisme de récolte (15) peut aisément se déplacer en hauteur par rapport à la roue (14), afin de s'adapter au relief du terrain, tout en autorisant le pivotement de l'organe de guidage (26) de la roue (14). Le quadrilatère déformable (25) comporte une console (28), à la partie supérieure de laquelle est articulé l'organe de guidage (26) de la roue (14), et qui est lié au mécanisme de récolte (15) au moyen de deux bielles (29, 30). Ce quadrilatère déformable (25) a au moins sensiblement la forme d'un parallélogramme dont le côté matérialisé par la console (28), s'étend vers le haut et vers l'arrière par rapport à la direction de travail (23), de sorte à ménager un espace pour la roue (14). Avantageusement, l'axe géométrique (27A) et l'axe de roulement (14A) de la roue (14) sont sensiblement concourants.

Entre les deux dispositifs de liaison (16, 17) s'étend le mécanisme de récolte (15). Le mécanisme de récolte (15) comporte une structure porteuse (31) à laquelle sont liés les deux dispositifs de liaison (16, 17). Cette structure porteuse (31) supporte une barre de coupe (32) équipée d'organes de coupe (33), et un rotor de traitement (34) - dont seul l'axe de rotation est représenté sur les figures 1 et 4 - destiné à traiter le produit coupé par lesdits organes de coupe (33). La structure porteuse (31) s'étend au moins sensiblement perpendiculairement à la direction de travail (23) et comporte un carter d'entrée (35) servant à l'entraînement des organes de coupe (33) et du rotor de traitement (34). Le carter d'entrée (35) est implanté dans le voisinage de la deuxième liaison pivot (22) liant le premier dispositif de liaison (16) au mécanisme de récolte (15). Du reste, le mécanisme de récolte (15) comporte aussi des organes de protection (36) qui s'étendent autour de la barre de coupe (32) et du rotor de traitement (34).

Le délestage du mécanisme de récolte (15) est réalisé au moyen de deux organes de délestage et de levage (37, 38), chacun associé au dispositif de liaison (16, 17) correspondant. Le premier organe de délestage et de levage (37) est implanté entre le bras oscillant (20) du premier dispositif de liaison (16) et la structure porteuse (31) du mécanisme de récolte (15). Comme visible sur la figure 5, le premier organe de délestage et de levage (37) est lié d'une part au moins sensiblement au milieu du bras oscillant (20) à l'aide d'une articulation élastique (39) et d'autre part au carter d'entrée (35) de la structure porteuse (31) au moyen de deux bras (40, 41). Ces deux bras (40, 41) forment avec le carter d'entrée (35) une triangulation très rigide à laquelle est lié le premier dispositif de délestage et de levage (37) à l'aide d'une bague élastique (42) du type "silentbloc". Grâce à l'articulation élastique (39) et à la bague élastique (42), l'organe de délestage et de levage (37) est d'un montage aisé et d'un fonctionnement silencieux. De surcroît, les vibrations sont amorties.

Le deuxième organe de délestage et de levage (38) (figure 6), s'étend entre la partie inférieure de la console (28) du quadrilatère déformable (25) et la bielle supérieure (29) dudit quadrilatère déformable (25). Là aussi, l'organe de délestage et de levage (38) est lié au quadrilatère déformable (25) au moyen d'une articulation élastique (43) et d'une bague élastique (44). Compte tenu de leur agencement, les deux organes de délestage et de levage (37, 38) assurent, lors du travail, le délestage des extrémités longitudinales (18, 24) du mécanisme de récolte (15).

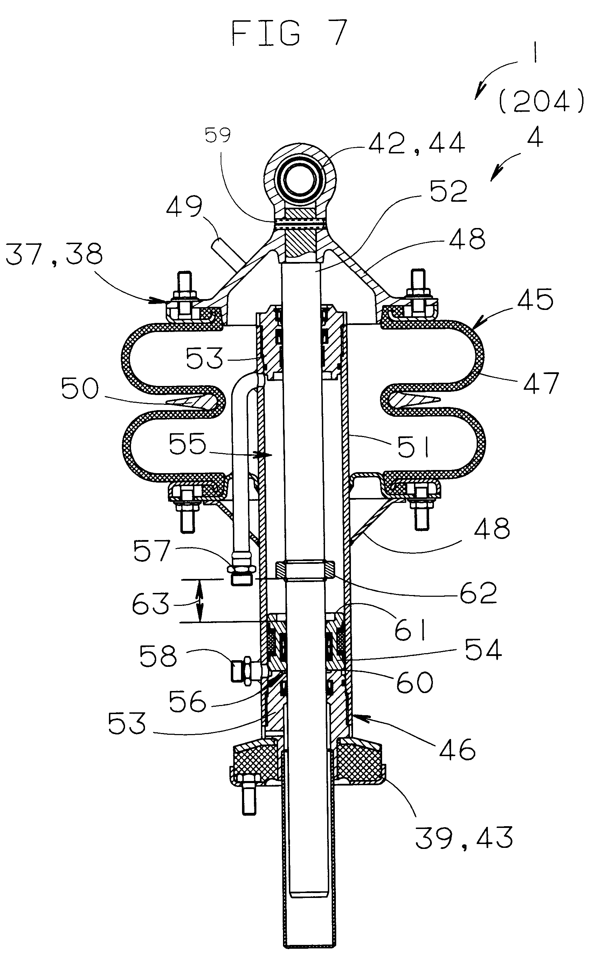

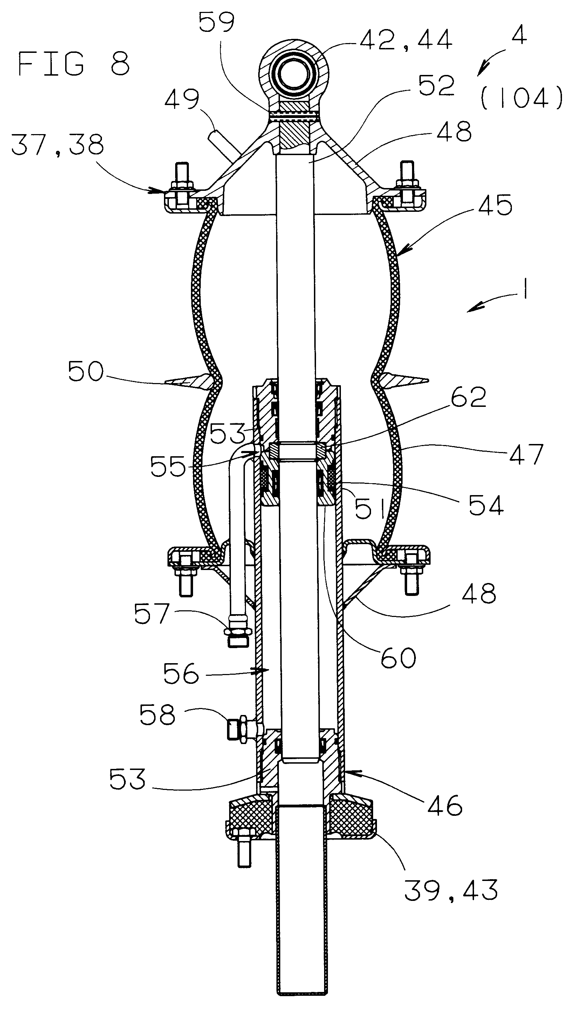

Sur les figures 7 et 8 apparaît, en détail, un tel organe de délestage et de levage (37, 38). Celui-ci comporte un ressort à gaz (45) servant à délester le mécanisme de récolte (15), monté en parallèle avec un vérin de levage (46) permettant de lever ledit mécanisme de récolte (15) lorsque l'utilisateur le souhaite. Le ressort à gaz (45) comporte une enveloppe déformable (47) sous pression et deux flasques (48) liés chacun à une extrémité longitudinale correspondante de ladite enveloppe déformable (47). Le ressort à gaz (45) contient un gaz qui peut être amené à la pression désirée au travers d'une valve (49) implantée sur l'un des flasques (48). En gonflant plus ou moins l'enveloppe déformable (47) au travers de la valve (49), l'utilisateur a la possibilité d'adapter la rigidité du ressort à gaz (45) aux conditions de travail rencontrées.

Avantageusement, le ressort à gaz (45) contient de l'air, ce qui permet à l'utilisateur de gonfler aisément l'enveloppe déformable (47) au moyen d'une simple pompe à air. En outre, pour limiter la déformation latérale de l'enveloppe déformable (47) et la contraindre à une déformation longitudinale plus importante, l'enveloppe déformable (47) est entourée d'un organe de rigidification latérale (50).

Le vérin de levage (46), quant à lui, comporte notamment un cylindre (51) et une tige (52). La tige (52) est fixée au flasque supérieur (48) du ressort à gaz (45) au moyen d'une goupille (59), alors que le cylindre (51) est lié rigidement au flasque inférieur (48) dudit ressort à gaz (45). A chacune de ses extrémités le cylindre (51) est muni d'une bague de guidage étanche (53) permettant à la tige (52) de déboucher de part et d'autre du cylindre (51). Au travail, lorsque le ressort à gaz (45) s'allonge et se raccourcit sous l'action du déplacement en hauteur du mécanisme de récolte (15), les deux flasques (48) du ressort à gaz (45) se rapprochent et s'éloignent l'un de l'autre pendant que la tige (52) coulisse dans le cylindre (51). Etant donné qu'aucun élément ne gêne le déplacement de la tige (52) dans le cylindre (51), le mécanisme de récolte (15) peut aisément être délesté au travail.

Afin de lever le mécanisme de récolte (15) grâce au vérin de levage (46), il est prévu un piston (54) servant à allonger ledit vérin de levage (46). Le piston (54) est monté coulissant sur la tige (52) et sépare le cylindre (51) en deux chambres distinctes (55, 56), chacune alimentée au travers d'une conduite (57, 58) respective. Au travail, la chambre inférieure (56) du cylindre (51) est vide et la face inférieure (60) du piston (54) s'appuie, sous l'action du fluide contenu dans la chambre supérieure (55), contre la bague de guidage inférieure (53). Par ailleurs, la face supérieure (61) du piston (54) est destinée à s'appuyer contre un collet (62) implanté un peu plus haut sur la tige (52) du vérin de levage (46). Comme dit précédemment, le piston (54) ne gêne pas le fonctionnement du ressort à gaz (45) durant le travail, étant donné qu'il subsiste un jeu fonctionnel (63) entre la face supérieure (61) du piston (54) et le collet (62) de la tige (52). Mais lorsque l'utilisateur désire lever le mécanisme de récolte (15), il alimente depuis le tracteur (2) la chambre inférieure (56) du cylindre (51), ce qui a pour effet de translater le piston (54) vers le haut. Dès l'instant où le piston (54) commence à pousser le collet (62) de la tige (52) vers le haut, le vérin de levage (46) et le ressort à gaz (45) s'allongent. Ce faisant, le piston (54) et la tige (52) se translatent jusqu'à ce que le piston (54) arrive en bout de course. Dans sa position levée, le mécanisme de récolte (15) s'étend au moins sensiblement parallèlement au-dessus du sol et l'action des ressorts à gaz (45) est annulée (figure 8).

L'entraînement du mécanisme de récolte (15) est réalisé à partir de la prise de force (non représentée) du tracteur (2), qui entraîne, par l'intermédiaire d'un arbre télescopique à joints universels (64), un limiteur de couple (65) monté sur l'arbre d'entrée (66) d'un dispositif de transmission de mouvement (67) (figure 3). Le dispositif de transmission (67) comporte un carter inférieur (68) solidaire de la structure d'attelage (3) et un carter supérieur (69) solidaire de la tête d'attelage (19). L'arbre d'entrée (66) du carter inférieur (68) du dispositif de transmission de mouvement (67) entraîne, par l'intermédiaire d'un premier couple de roues dentées coniques (70), un arbre intermédiaire (71) dont l'axe de rotation est confondu avec l'axe géométrique (7A), et qui entraîne, par l'intermédiaire d'un deuxième couple de roues dentées coniques (72), l'arbre de sortie (73) du carter supérieur (69). Ce dernier entraîne, par l'intermédiaire d'un autre arbre télescopique à joints universels (74) (figures 1, 4 et 5), l'arbre d'entrée (non représenté) du carter d'entrée (35) du mécanisme de récolte (15). Afin de réduire l'angle de fonctionnement des joints universels de cet arbre télescopique (74), l'arbre de sortie (73) du carter supérieur (69) s'étend, au travail normal, au moins sensiblement au même niveau que l'arbre d'entrée (non représenté) du carter d'entrée (35) du mécanisme de récolte (15).

En vue du transport, le pivotement de l'organe de guidage (26) de la roue (14) peut être condamné au moyen d'un dispositif de verrouillage (75) (figure 1, 4 et 6). Le dispositif de verrouillage (75) comporte notamment un vérin de positionnement (76) fixé à la console (28) du quadrilatère déformable (25) et un levier (77) lié rigidement à l'organe de guidage (26) de la roue (14). Au travail, le vérin de positionnement (76) n'agit pas sur ledit levier (77), ce qui permet à la roue (14) de s'orienter automatiquement autour de l'axe géométrique (27A) en fonction de son déplacement. A l'opposé, en vue du transport, le vérin de positionnement (76) agit sur le levier (77) au moyen d'un organe d'orientation (78), de sorte à orienter la roue (14) suivant la direction de transport (79) et à maintenir ladite roue (14) dans sa position de transport (figure 4). A cet effet, le levier (77) présente deux butées (80) s'étendant de part et d'autre de l'axe géométrique (27A) et qui sont chacune réalisée sous forme d'un galet (81). Compte tenu du fait que chaque galet (81) est en sus monté pivotant autour d'un axe (82) dirigé au moins sensiblement verticalement, l'orientation et le verrouillage de la roue (14) s'effectue aisément.

La faucheuse (1) selon l'invention fonctionne de la manière suivante :

Au transport (figures 3, 4 et 8), le vérin de manoeuvre (8) autorise le pivotement du corps (4) autour de l'axe géométrique (7A), tandis que la roue (14) est orientée dans la direction de transport (79). Les deux vérins de levage (46), quant à eux, maintiennent le mécanisme de récolte (15) au moins sensiblement parallèlement au-dessus du sol. Comme le corps (4) de la faucheuse (1) s'étend au moins sensiblement dans la voie du tracteur (2), les manoeuvres au transport sont facilitées. De surcroît, il ne faut qu'une place réduite pour le remisage.

Pour amener le corps (4) de la faucheuse (1) de sa position de transport (104) dans sa position de travail (204), on autorise le pivotement de la roue (14) autour de l'axe géométrique (27A) au moyen du vérin de positionnement (76) et on pivote le corps (4) dans sa position de travail (204) sous l'action du vérin de manoeuvre (8). Vu que le corps (4) s'appuie sur le sol, tant dans sa position de transport (104) que dans sa position de travail (204) au moyen d'au moins une roue (14), le tracteur conserve une bonne stabilité. Par ailleurs, compte tenu du dispositif de transmission de mouvement (67) perfectionné, le mécanisme de récolte (15) est susceptible d'être entraîné dans toutes les positions dans lesquelles il peut être pivoté autour de l'axe géométrique (7A).

Au travail (figures 1, 2, 5, 6 et 7), le vérin de manoeuvre (8) condamne le pivotement du corps (4) autour de l'axe géométrique (7A) tandis que la roue (14) est susceptible de pivoter autour de l'axe géométrique (27A). L'action des vérins de levage (46), quant à elle, est supprimée de sorte à permettre au mécanisme de récolte (15) de s'adapter au relief du sol. En sus, vu que chaque extrémité longitudinale (18, 24) est délestée, le mécanisme de récolte (15) passe aisément par dessus les obstacles que peut présenter le relief du sol.

Finalement, différentes modifications restent possibles, notamment en ce qui concerne la constitution des divers éléments ou par substitution d'équivalents techniques, sans pour autant sortir du domaine de protection défini par les revendications.

## Revendications

1. Machine de coupe (1) comportant :
- une structure d'attelage (3) destinée à être liée à l'attelage (6) d'un véhicule moteur (2) ;
- un mécanisme de coupe (15) s'étendant au travail, transversalement à la direction de travail (23)
- un premier dispositif de liaison (16) liant le mécanisme de coupe (15) à la structure d'attelage (3), ledit premier dispositif de liaison (16) étant lié au mécanisme de coupe (15) au moins sensiblement dans le voisinage d'une première extrémité longitudinale (18) dudit mécanisme de coupe (15) et autorisant le pivotement dudit mécanisme de coupe (15) par rapport à la structure d'attelage (3) autour d'un axe géométrique (21A, 22A) dirigé vers l'avant ;
- un premier organe de délestage (37) servant à délester ladite première extrémité longitudinale (18) du mécanisme de coupe (15) ;
- une roue (14) agencée dans le voisinage de la deuxième extrémité longitudinale (24) du mécanisme de coupe (15) et qui roule sur le sol au travail ;
- un deuxième dispositif de liaison (17) liant ladite roue (14) au mécanisme de coupe (15), ledit deuxième dispositif de liaison (17) étant lié au mécanisme de coupe (15) au moins sensiblement dans le voisinage de la deuxième extrémité longitudinale (24) dudit mécanisme de coupe (15) et autorisant un déplacement en hauteur du mécanisme de coupe (15) par rapport à ladite roue (14) ; et
- un deuxième organe de délestage (38) servant à délester la deuxième extrémité longitudinale (24) du mécanisme de coupe (15),
caractérisée par le fait qu'au travail, le premier dispositif de liaison (16) autorise en sus un déplacement en hauteur du mécanisme de coupe (15) par rapport à la structure d'attelage (3) et que la roue (14) est susceptible de pivoter autour d'un axe géométrique (27A) dirigé vers le haut.

2. Machine de coupe selon la revendication 1, caractérisée par le fait que le premier dispositif de liaison (16) comporte un bras oscillant (20) lié d'une part directement ou indirectement à la structure d'attelage (3) au moyen d'une première liaison pivot (21) et d'autre part au mécanisme de coupe (15) au moyen d'une deuxième liaison pivot (22) ; au travail, l'axe géométrique (21A, 22A) de chaque liaison pivot (21, 22) étant dirigé vers l'avant.

3. Machine de coupe selon la revendication 2, caractérisée par le fait que lesdits axes géométriques (21A, 22A) sont au moins sensiblement parallèles entre eux et forment, en vue de dessus, un angle (µ) avec l'axe longitudinal (15') du mécanisme de coupe (15), compris entre 45° et 90°, avec de préférence environ 60°.

4. Machine de coupe selon la revendication 2 ou 3, caractérisée par le fait que l'axe géométrique (22A) de la deuxième liaison pivot (22) s'étend au moins sensiblement à mi-hauteur du mécanisme de coupe (15).

5. Machine de coupe selon l'une des revendications 1 à 4, caractérisée par le fait que le deuxième dispositif de liaison (17) comporte un organe de guidage (26) de la roue (14) et une structure déformable en hauteur (25), lequel organe de guidage (26) est articulé à ladite structure déformable (25) au moyen d'une première articulation (27) dont ledit axe géométrique (27A) est dirigé vers le haut.

6. Machine de coupe selon la revendication 5, caractérisée par le fait que la structure déformable (25) comporte une console (28), à laquelle est articulé l'organe de guidage (26) au moyen de la première articulation (27), et qui est liée au mécanisme de coupe (15) au moyen de deux bielles (29, 30) s'étendant au moins sensiblement orthogonalement à l'axe longitudinal (15') du mécanisme de coupe (15).

7. Machine de coupe selon la revendication 6, caractérisée par le fait que la structure déformable (25) forme avec une partie du mécanisme de coupe (15) au moins sensiblement un parallélogramme déformable.

8. Machine de coupe selon la revendication 6 ou 7, caractérisée par le fait que la console (28) s'étend vers l'arrière et vers le haut et que la première articulation (27) est implantée à la partie supérieure de ladite console (28).

9. Machine de coupe selon l'une des revendications 1 à 8, caractérisée par le fait que le premier organe de délestage (37) est lié au premier dispositif de liaison (16).

10. Machine de coupe selon la revendication 9, caractérisée par le fait que le premier organe de délestage (37) s'étend entre le premier dispositif de liaison (16) et le mécanisme de coupe (15).

11. Machine de coupe selon l'une des revendications 1 à 10, caractérisée par le fait que le deuxième organe de délestage (38) est lié au deuxième dispositif de liaison (17).

12. Machine de coupe selon l'une des revendications 6 à 8, en combinaison avec la revendication 11, caractérisée par le fait que le deuxième organe de délestage (38) s'étend entre la console (28) et la bielle supérieure (29) de la structure déformable (25).

13. Machine de coupe selon l'une des revendications 1 à 12, caractérisée par le fait que l'un au moins des deux organes de délestage (37, 38) comporte un ressort à gaz (45).

14. Machine de coupe selon l'une des revendications 1 à 13, caractérisée par le fait qu'elle comporte en sus au moins un organe de levage (46) du mécanisme de coupe (15) afin de lever le mécanisme de coupe (15) au moins sensiblement parallèlement au-dessus du sol.

15. Machine de coupe selon la revendication 14, caractérisée par le fait que chaque dispositif de liaison (16, 17) est muni d'un organe de levage (46) respectif.

16. Machine de coupe selon la revendication 15, caractérisée par le fait que chaque organe de levage (46) est combiné avec l'organe de délestage (37, 38) correspondant.

17. Machine de coupe selon l'une des revendications 1 à 16, caractérisée par le fait :
- que le pivotement de la roue (14) autour de l'axe géométrique (27A) d'une première articulation (27) peut être condamné au moyen d'un premier dispositif de verrouillage (75), et
- que le premier dispositif de liaison (16) comporte une deuxième articulation (7) présentant un axe géométrique (7A) dirigé vers le haut, le mécanisme de coupe pouvant être amené d'une position de travail (204), dans laquelle son axe longitudinal (15') s'étend transversalement à la direction de travail (23), dans une position de transport (104), dans laquelle son axe longitudinal (15') s'étend au moins sensiblement parallèlement à la direction de transport (79), par pivotement autour de l'axe géométrique (7A) de ladite deuxième articulation (7), le pivotement du mécanisme de coupe (15) autour de l'axe géométrique (7A) de la deuxième articulation (7) étant condamnable par un deuxième dispositif de verrouillage (8),
de sorte :
- qu'au travail, le deuxième dispositif de verrouillage (8) condamne le pivotement du mécanisme de coupe (15) autour de l'axe géométrique (7A) de la deuxième articulation (7), tandis que la roue (14) est susceptible de pivoter autour de l'axe géométrique (27A) de la première articulation (27), alors
- qu'au transport, le premier dispositif de verrouillage (75) condamne le pivotement de la roue (14) autour de l'axe géométrique (27A) de la première articulation (27), tandis que le mécanisme de coupe (15) est susceptible de pivoter autour de l'axe géométrique (7A) de la deuxième articulation (7).

18. Machine de coupe selon les revendications 2 et 17, caractérisée par le fait que la deuxième articulation (7) est prévue entre la structure d'attelage (3) et la première liaison pivot (21) du bras oscillant (20).

19. Machine de coupe selon la revendication 17 ou 18, caractérisée par le fait que l'axe géométrique (27A) de la première articulation (27) est au moins sensiblement parallèle à l'axe géométrique (7A) de ladite deuxième articulation (7).

20. Machine de coupe selon l'une des revendications 17 à 19, caractérisée par le fait que le pivotement du mécanisme de coupe (15) de sa position de transport (104) vers sa position de travail (204), autour de l'axe (7A) de la deuxième articulation (7), est réalisé sous l'action d'un organe de manoeuvre (8).

21. Machine de coupe selon la revendication 20, caractérisée par le fait que le deuxième dispositif de verrouillage (8) est, en partie au moins, constitué par ledit organe de manoeuvre (8).

22. Machine de coupe selon l'une des revendications 17 à 21, caractérisée par le fait que le premier dispositif de verrouillage (75) comporte un organe d'orientation (78) servant, en vue du transport, à orienter la roue (14) suivant la direction de transport (79) sous l'action d'un organe de positionnement (76).

23. Machine de coupe selon la revendication 22, caractérisée par le fait que l'organe de positionnement (76) est destiné à agir par l'intermédiaire de l'organe d'orientation (78) sur un levier (77) lié rigidement à l'organe de guidage (26) de la roue (14) et présentant deux butées (80) implantées de part et d'autre de l'axe géométrique (27A) de la première articulation (27).

24. Machine de coupe selon la revendication 23, caractérisée par le fait que le contact entre le levier (77) et l'organe d'orientation (78) est réalisé au moyen d'au moins un galet (81) tournant autour d'un axe (82) au moins sensiblement parallèle à l'axe géométrique (27A) de la première articulation (27).

25. Machine de coupe selon l'une des revendications 17 à 24, caractérisée par le fait qu'au travail, la roue (14) s'étend derrière une partie au moins des organes de travail (33, 34), tandis qu'au transport, la roue (14) s'étend dans le prolongement du mécanisme de coupe (15).

26. Machine de coupe selon l'une des revendications 1 à 25, caractérisée par le fait que la structure d'attelage (3) comporte trois points d'attelage destinés à être liés aux trois points d'attelage (5) du dispositif d'attelage (6) d'un véhicule moteur (2).

27. Machine de coupe selon la revendication 20 ou 21, caractérisée par le fait que l'organe de manoeuvre (8) est constitué par au moins un vérin.

28. Machine de coupe selon la revendication 27, caractérisée par le fait que le vérin de manoeuvre (8) est en liaison d'entraînement avec le premier dispositif de liaison (16).

29. Machine de coupe selon la revendication 28, caractérisée par le fait :
- que le vérin de manoeuvre (8) comporte deux cylindres (9) s'étendant dans le prolongement l'un de l'autre et fixés à la structure d'attelage (3), et deux pistons (10) chacun monté de manière coulissante dans le cylindre (9) correspondant,
et
- que la liaison d'entraînement est réalisée au moyen d'une crémaillère (11) implantée entre lesdits pistons (10), ladite crémaillère (11) engrènant avec un secteur denté (13) qui est lié au premier dispositif de liaison (16) et qui est centré sur l'axe géométrique (7A) de la deuxième articulation (7).

30. Machine de coupe selon l'une des revendications 27 à 29, caractérisée par le fait que le vérin de manoeuvre (8) est un vérin hydraulique.

31. Machine de coupe selon l'une des revendications 22 à 24, caractérisée par le fait que l'organe de positionnement (76) comporte au moins un vérin hydraulique.

32. Machine de coupe selon l'une des revendications 1 à 31, caractérisée par le fait que c'est une faucheuse avec ou sans organes de traitement (34) du produit coupé.

## Claims

1. Cutting machine (1) including:
- a hitching structure (3) intended to be connected to the hitch (6) of a motor vehicle (2);
- a cutting mechanism (15) which, during work, extends transversely to the direction of work (23);
- a first connection device (16) connecting the cutting mechanism (15) to the hitching structure (3), the said first connection device (16) being connected to the cutting mechanism (15) at least substantially in the vicinity of a first longitudinal end (18) of the said cutting mechanism (15) and allowing the said cutting mechanism (15) to pivot with respect to the hitching structure (3) about a forwards-directed geometric axis (21A, 22A);
- a first load-lightening member (37) serving to lighten the said first longitudinal end (18) of the cutting mechanism (15);
- a wheel (14) arranged in the vicinity of the second longitudinal end (24) of the cutting mechanism (15) and which runs along the ground during work;
- a second connection device (17) connecting the said wheel (14) to the cutting mechanism (15), the said second connection device (17) being connected to the cutting mechanism (15) at least substantially in the vicinity of the second longitudinal end (24) of the said cutting mechanism (15) and allowing the cutting mechanism (15) to be moved heightwise relative to the said wheel (14); and
- a second load-lightening member (38) serving to lighten the second longitudinal end (24) of the cutting mechanism (15),
***characterized in*** that during work, the first connection device (16) in addition allows a heightwise movement of the cutting mechanism (15) relative to the hitching structure (3) and in that the wheel (14) is capable of pivoting about an upwards-directed geometric axis (27A).

2. Cutting machine according to Claim 1, ***characterized in*** that the first connection device (16) includes an oscillating arm (20) connected on the one hand directly or indirectly to the hitching structure (3) by means of a first pivot connection (21) and on the other hand to the cutting mechanism (15) by means of a second pivot connection (22); during work, the geometric axis (21A, 22A) of each pivot connection (21, 22) being directed forward.

3. Cutting machine according to Claim 2, ***characterized in*** that the said geometric axes (21A, 22A) are at least substantially parallel and form, when viewed from above, an angle (µ) with the longitudinal axis (15') of the cutting mechanism (15) of between 45° and 90°, with approximately 60° as a preference.

4. Cutting machine according to Claim 2 or 3, ***characterized in*** that the geometric axis (22A) of the second pivot connection (22) extends at least substantially at half the height of the cutting mechanism (15).

5. Cutting machine according to one of Claims 1 to 4, ***characterized in*** that the second connection device (17) includes a member (26) for guiding the wheel (14) and a heightwise-deformable structure (25), which guide member (26) is articulated to the said deformable structure (25) by means of a first articulation (27) the said geometric axis (27A) of which is directed upward.

6. Cutting machine according to Claim 5, ***characterized in*** that the deformable structure (25) includes a bracket (28) to which the guide member (26) is articulated by means of the first articulation (27) and which is connected to the cutting mechanism (15) by means of two connecting rods (29, 30) extending at least substantially orthogonally to the longitudinal axis (15') of the cutting mechanism (15).

7. Cutting machine according to Claim 6, ***characterized in*** that the deformable structure (25) forms, at least substantially, a deformable parallelogram with one part of the cutting mechanism (15).

8. Cutting machine according to Claim 6 or 7, ***characterized in*** that the bracket (28) extends backwards and upwards and in that the first articulation (27) is fitted in the upper part of the said bracket (28).

9. Cutting machine according to one of Claims 1 to 8, ***characterized in*** that the first load-lightening member (37) is connected to the first connection device (16).

10. Cutting machine according to Claim 9, ***characterized in*** that the first load-lightening member (37) extends between the first connection device (16) and the cutting mechanism (15).

11. Cutting machine according to one of Claims 1 to 10, ***characterized in*** that the second load-lightening member (38) is connected to the second connection device (17).

12. Cutting machine according to one of Claims 6 to 8, in combination with Claim 11, ***characterized in*** that the second load-lightening member (38) extends between the bracket (28) and the upper connecting rod (29) of the deformable structure (25).

13. Cutting machine according to one of Claims 1 to 12, ***characterized in*** that at least one of the two load-lightening members (37, 38) includes a gas spring (45).

14. Cutting machine according to one of Claims 1 to 13, ***characterized in*** that it additionally includes at least one member (46) for raising the cutting mechanism (15) in order to raise the cutting mechanism (15) at least substantially parallel above the ground.

15. Cutting machine according to Claim 14, ***characterized in*** that each connection device (16, 17) is equipped with a respective raising member (46).

16. Cutting machine according to Claim 15, ***characterized in*** that each raising member (46) is combined with the corresponding load-lightening member (37, 38).

17. Cutting machine according to one of Claims 1 to 16, ***characterized***:
- in that the pivoting of the wheel (14) about the geometric axis (27A) of a first articulation (27) can be blocked by means of a first locking device (75), and
- in that the first connection device (16) includes a second articulation (7) having an upwards-directed geometric axis (7A), it being possible for the cutting mechanism to be brought from a work position (204) in which its longitudinal axis (15') extends transversely to the direction of work (23), into a transport position (104) in which its longitudinal axis (15') extends at least substantially parallel to the direction of transport (79) by pivoting it about the geometric axis (7A) of the said second articulation (7), it being possible for the pivoting of the cutting mechanism (15) about the geometric axis (7A) of the second articulation (7) to be blocked by a second locking device (8), so that:
- during work, the second locking device (8) blocks the pivoting of the cutting mechanism (15) about the geometric axis (7A) of the second articulation (7) whereas the wheel (14) can pivot about the geometric axis (27A) of the first articulation (27), while
- during transport, the first locking device (75) blocks the pivoting of the wheel (14) about the geometric axis (27A) of the first articulation (27), whereas the cutting mechanism (15) can pivot about the geometric axis (7A) of the second articulation (7).

18. Cutting machine according to Claims 2 and 17, ***characterized in*** that the second articulation (7) is provided between the bitching structure (3) and the first pivot connection (21) of the oscillating arm (20).

19. Cutting machine according to Claim 17 or 18, ***characterized in*** that the geometric axis (27A) of the first articulation (27) is at least substantially parallel to the geometric axis (7A) of the said second articulation (7).

20. Cutting machine according to one of Claims 17 to 19, ***characterized in*** that the pivoting of the cutting mechanism (15) from its transport position (104) into its work position (204) about the axis (7A) of the second articulation (7) is achieved under the action of an operating member (8).

21. Cutting machine according to Claim 20, ***characterized in*** that the second locking device (8) consists, at least in part, of the said operating member (8).

22. Cutting machine according to one of Claims 17 to 21, ***characterized in*** that the first locking device (75) includes an orientation member (78) which serves, for the transport, to orientate the wheel (14) in the transport direction (79) under the action of a positioning member (76).

23. Cutting machine according to Claim 22**, *characterized in*** that the positioning member (76) is intended to act via the orientation member (78) on a lever (77) connected rigidly to the member (26) for guiding the wheel (14) and having two stops (80) fitted on either side of the geometric axis (27A) of the first articulation (27).

24. Cutting machine according to Claim 23, ***characterized in*** that the contact between the lever (77) and the orientation member (78) is achieved by means of at least one roller (81) rotating about a axis (82) at least substantially parallel to the geometric axis (27A) of the first articulation (27).

25. Cutting machine according to one of Claims 17 to 24, ***characterized in*** that during work, the wheel (14) extends behind at least some of the working members (33, 34), whereas during transport, the wheel (14) extends in line with the cutting mechanism (15).

26. Cutting machine according to one of Claims 1 to 25, ***characterized in*** that the hitching structure (3) includes three hitching points which are intended to be connected to the three hitching points (5) of the hitch (6) of a motor vehicle (2).

27. Cutting machine according to Claim 20 or 21, ***characterized in*** that the operating member (8) consists of at least one ram.

28. Cutting machine according to Claim 27, ***characterized in*** that the operating ram (8) is in drive connection with the first connection device (16).

29. Cutting machine according to Claim 28, ***characterized***:
- in that the operating ram (8) has two cylinders (9) extending in line with one another and fixed to the hitching structure (3) and two pistons (10), each one mounted so that it can slide in the corresponding cylinder (9),
and
- in that the drive connection is achieved by means of a rack (11) fitted in between the said pistons (10), the said rack (11) meshing with a toothed sector (13) which is connected to the first connection device (16) and which is centred on the geometric axis (7A) of the second articulation (7).

30. Cutting machine according to one of Claims 27 to 29, ***characterized in*** that the operating ram (8) is a hydraulic ram.

31. Cutting machine according to one of Claims 22 to 24, ***characterized in*** that the positioning member (76) includes at least one hydraulic ram.

32. Cutting machine according to one of Claims 1 to 31, ***characterized in*** that it is a mower with or without members (34) for processing the cut product.

## Patentansprüche

1. Schneidmaschine (1), die
- eine Kupplungsvorrichtung (3), die mit der Kupplungseinrichtung (6) eines Motorfahrzeugs (2) verbunden werden soll,
- einen Schneidmechanismus (15), der sich im Betrieb quer zur Betriebsrichtung (23) erstreckt,
- eine erste Verbindungsvorrichtung (16), die den Schneidmechanismus (15) mit der Kupplungsvorrichtung (3) verbindet, wobei die erste Verbindungsvorrichtung (16) zumindest im wesentlichen in der Nähe eines ersten Längsendes (18) des Schneidmechanismus (15) mit dem Schneidmechanismus (15) verbunden ist und das Schwenken des Schneidmechanismus (15) bezüglich der Kupplungsvorrichtung (3) um eine nach vorne ausgerichtete geometrische Achse (21A, 22A) gestattet,
- ein erstes Entlastungsglied (37), das zur Entlastung des ersten Längsendes (18) des Schneidmechanismus (15) dient,
- ein Rad (14), das in der Nähe des zweiten Längsendes (24) des Schneidmechanismus (15) angeordnet ist und im Betrieb über den Boden rollt,
- eine zweite Verbindungsvorrichtung (17), die das Rad (14) mit dem Schneidmechanismus (15) verbindet, wobei die zweite Verbindungsvorrichtung (17) zumindest im wesentlichen in der Nähe des zweiten Längsendes (24) des Schneidmechanismus (15) mit dem Schneidmechanismus (15) verbunden ist und eine Höhenverschiebung des Schneidmechanismus (15) bezüglich des Rads (14) gestattet, und
- ein zweites Entlastungsglied (38), das zur Entlastung des zweiten Längsendes (24) des Schneidmechanismus (15) dient,
umfaßt,
***dadurch gekennzeichnet***, daß im Betrieb die erste Verbindungsvorrichtung (16) darüber hinaus eine Höhenverschiebung des Schneidmechanismus (15) bezüglich der Kupplungsvorrichtung (3) gestattet und daß das Rad (14) um eine nach oben ausgerichtete geometrische Achse (27A) schwenken kann.

2. Schneidmaschine nach Anspruch 1, ***dadurch gekennzeichnet***, daß die erste Verbindungsvorrichtung (16) einen Schwenkarm (20) aufweist, der einerseits mittels einer ersten Gelenkverbindung (21) direkt oder indirekt mit der Kupplungsvorrichtung (3) und andererseits mittels einer zweiten Gelenkverbindung (22) mit dem Schneidmechanismus (15) verbunden ist, wobei die geometrische Achse (21A, 22A) jeder Gelenkverbindung (21, 22) im Betrieb nach vorne ausgerichtet ist.

3. Schneidmaschine nach Anspruch 2, ***dadurch gekennzeichnet***, daß die geometrischen Achsen (21A, 22A) zumindest im wesentlichen parallel zueinander sind und in Draufsicht mit der Längsachse (15') des Schneidmechanismus (15) einen Winkel (µ) zwischen 45° und 90°, vorzugsweise ca. 60°, bilden.

4. Schneidmaschine nach Anspruch 2 oder 3, ***dadurch gekennzeichnet***, daß die geometrische Achse (22A) der zweiten Gelenkverbindung (22) zumindest im wesentlichen auf halber Höhe des Schneidmechanismus (15) angeordnet ist.

5. Schneidmaschine nach einem der Ansprüche 1 bis 4, ***dadurch gekennzeichnet***, daß die zweite Verbindungsvorrichtung (17) ein Glied (26) zur Führung des Rads (14) und eine höhenverformbare Konstruktion (25) aufweist, wobei das Führungsglied (26) mittels eines ersten Gelenks (27), dessen geometrische Achse (27A) nach oben ausgerichtet ist, an der verformbaren Konstruktion (25) angelenkt ist.

6. Schneidmaschine nach Anspruch 5, ***dadurch gekennzeichnet***, daß die verformbare Konstruktion (25) eine Halterung (28) aufweist, an der das Führungsglied (26) mittels des ersten Gelenks (27) angelenkt ist und die mittels zweier Verbindungsstangen (29, 30), die sich zumindest im wesentlichen senkrecht zur Längsachse (15') des Schneidmechanismus (15) erstrecken, mit dem Schneidmechanismus (15) verbunden ist.

7. Schneidmaschine nach Anspruch 6, ***dadurch gekennzeichnet***, daß die verformbare Konstruktion (25) mit einem Teil des Schneidmechanismus (15) zumindest im wesentlichen ein verformbares Parallelogramm bildet.

8. Schneidmaschine nach Anspruch 6 oder 7, ***dadurch gekennzeichnet***, daß sich die Halterung (28) nach hinten und nach oben erstreckt und daß das erste Gelenk (27) am oberen Teil der Halterung (28) angebracht ist.

9. Schneidmaschine nach einem der Ansprüche 1 bis 8, ***dadurch gekennzeichnet***, daß das erste Entlastungsglied (37) mit der ersten Verbindungsvorrichtung (16) verbunden ist.

10. Schneidmaschine nach Anspruch 9, ***dadurch gekennzeichnet***, daß sich das erste Entlastungsglied (37) zwischen der ersten Verbindungsvorrichtung (16) und dem Schneidmechanismus (15) erstreckt.

11. Schneidmaschine nach einem der Ansprüche 1 bis 10, ***dadurch gekennzeichnet***, daß das zweite Entlastungsglied (38) mit der zweiten Verbindungsvorrichtung (17) verbunden ist.

12. Schneidmaschine nach einem der Ansprüche 6 bis 8 in Kombination mit Anspruch 11, ***dadurch gekennzeichnet***, daß sich das zweite Entlastungsglied (38) zwischen der Halterung (28) und der oberen Verbindungsstange (29) der verformbaren Konstruktion (25) erstreckt.

13. Schneidmaschine nach einem der Ansprüche 1 bis 12, ***dadurch gekennzeichnet***, daß mindestens eines der beiden Entlastungsglieder (37, 38) eine Gasfeder (45) aufweist.

14. Schneidmaschine nach einem der Ansprüche 1 bis 13, ***dadurch gekennzeichnet***, daß sie darüber hinaus mindestens ein Glied (46) zum Anheben des Schneidmechanismus (15) aufweist, um den Schneidmechanismus (15) zumindest im wesentlichen parallel über den Boden anzuheben.

15. Schneidmaschine nach Anspruch 14, ***dadurch gekennzeichnet***, daß jede Verbindungsvorrichtung (16, 17) mit einem entsprechenden Hebeglied (46) ausgestattet ist.

16. Schneidmaschine nach Anspruch 15, ***dadurch gekennzeichnet***, daß jedes Hebeglied (46) mit dem zugehörigen Entlastungsglied (37, 38) kombiniert ist.

17. Schneidmaschine nach einem der Ansprüche 1 bis 16, ***dadurch gekennzeichnet***, daß
- das Schwenken des Rads (14) um die geometrische Achse (27A) eines ersten Gelenks (27) mittels einer ersten Verriegelungsvorrichtung (75) verhindert werden kann und
- die erste Verbindungsvorrichtung (16) ein zweites Gelenk (7) mit einer nach oben ausgerichteten geometrischen Achse (7A) aufweist, wobei der Schneidmechanismus durch Schwenken um die geometrische Achse (7A) des zweiten Gelenks (7) aus einer Betriebsstellung (204), in der seine Längsachse (15') quer zur Betriebsrichtung (23) verläuft, in eine Transportstellung (104), in der seine Längsachse (15') zumindest im wesentlichen parallel zur Transportrichtung (79) verläuft, gebracht werden kann, wobei das Schwenken des Schneidmechanismus (15) um die geometrische Achse (7A) des zweiten Gelenks (7) durch eine zweite Verriegelungsvorrichtung (8) verhindert werden kann, und zwar derart,
sodaß:
- die zweite Verriegelungsvorrichtung (8) im Betrieb das Schwenken des Schneidmechanismus (15) um die geometrische Achse (7A) des zweiten Gelenks (7) verhindert, während das Rad (14) um die geometrische Achse (27A) des ersten Gelenks (27) schwenken kann, wohingegen
- die erste Verriegelungsvorrichtung (75) beim Transport das Schwenken des Rads (14) um die geometrische Achse (27A) des ersten Gelenks (27) verhindert, während der Schneidmechanismus (15) um die geometrische Achse (7A) des zweiten Gelenks (7) schwenken kann.

18. Schneidmaschine nach den Ansprüchen 2 und 17, ***dadurch gekennzeichnet***, daß das zweite Gelenk (7) zwischen der Kupplungsvorrichtung (3) und der ersten Gelenkverbindung (21) des Schwenkarms (20) vorgesehen ist.

19. Schneidmaschine nach Anspruch 17 oder 18, ***dadurch gekennzeichnet***, daß die geometrische Achse (27A) des ersten Gelenks (27) zumindest im wesentlichen parallel zur geometrischen Achse (7A) des zweiten Gelenks (7) verläuft.

20. Schneidmaschine nach einem der Ansprüche 17 bis 19, ***dadurch gekennzeichnet***, daß das Schwenken des Schneidmechanismus (15) um die Achse (7A) des zweiten Gelenks (7) aus seiner Transportstellung (104) in seine Betriebsstellung (204) unter der Wirkung eines Betätigungsglieds (8) durchgeführt wird.

21. Schneidmaschine nach Anspruch 20, ***dadurch gekennzeichnet***, daß die zweite Verriegelungsvorrichtung (8) zumindest teilweise aus dem Betätigungsglied (8) besteht.

22. Schneidmaschine nach einem der Ansprüche 17 bis 21, ***dadurch gekennzeichnet***, daß die erste Verriegelungsvorrichtung (75) ein Ausrichtungsglied (78) enthält das im Hinblick auf den Transport zur Ausrichtung des Rads (14) in Transportrichtung (79) unter der Wirkung eines Positionierglieds (76) dient.

23. Schneidmaschine nach Anspruch 22, ***dadurch gekennzeichnet***, daß das Positionierglied (76) dazu bestimmt ist, mittels des Ausrichtungsglieds (78) auf einen Hebel (77) einzuwirken, der starr mit dem Führungsglied (26) des Rads (14) verbunden ist und zwei Anschläge (80) aufweist, die auf beiden Seiten der geometrischen Achse (27A) des ersten Gelenks (27) angebracht sind.

24. Schneidmaschine nach Anspruch 23, ***dadurch gekennzeichnet***, daß der Kontakt zwischen dem Hebel (77) und dem Ausrichtungsglied (78) mittels mindestens einer Rolle (81) hergestellt wird, die sich um eine zumindest im wesentlichen parallel zur geometrischen Achse (27A) des ersten Gelenks (27) verlaufende Achse (82) dreht.

25. Schneidmaschine nach einem der Ansprüche 17 bis 24, ***dadurch gekennzeichnet***, daß sich das Rad (14) im Betrieb hinter zumindest einem Teil der Arbeitsglieder (33, 34) erstreckt, während sich das Rad (14) beim Transport in der Verlängerung des Schneidmechanismus (15) erstreckt.

26. Schneidmaschine nach einem der Ansprüche 1 bis 25, ***dadurch gekennzeichnet***, daß die Kupplungsvorrichtung (3) drei Kupplungspunkte aufweist, die mit den drei Kupplungspunkten (5) der Kupplungseinrichtung (6) eines Motorfahrzeugs (2) verbunden werden sollen.

27. Schneidmaschine nach Anspruch 20 oder 21, ***dadurch gekennzeichnet***, daß das Betätigungsglied (8) aus mindestens einem Zylinder besteht.

28. Schneidmaschine nach Anspruch 27, ***dadurch gekennzeichnet***, daß der Betätigungszylinder (8) in Antriebsverbindung mit der ersten Verbindungsvorrichtung (16) steht.

29. Schneidmaschine nach Anspruch 28, ***dadurch gekennzeichnet***,
- daß der Betätigungszylinder (8) zwei Rohrzylinder (9) aufweist, die sich in ihrer gegenseitigen Verlängerung erstrecken und an der Kupplungsvorrichtung (3) befestigt sind, sowie zwei Kolben (10), die jeweils verschiebbar in dem zugehörigen Rohrzylinder (9) angeordnet sind,
und
- daß die Antriebsverbindung mittels einer zwischen den Kolben (10) angebrachten Zahnstange (11) hergestellt wird, die mit einem Zahnsegment (13) in Eingriff steht, das mit der ersten Verbindungsvorrichtung (16) verbunden und auf der geometrischen Achse (7A) des zweiten Gelenks (7) zentriert ist.

30. Schneidmaschine nach einem der Ansprüche 27 bis 29, ***dadurch gekennzeichnet***, daß es sich bei dem Betätigungszylinder (8) um einen Hydraulikzylinder handelt.

31. Schneidmaschine nach einem der Ansprüche 22 bis 24, ***dadurch gekennzeichnet***, daß das Positionierglied (76) mindestens einen Hydraulikzylinder enthält.

32. Schneidmaschine nach einem der Ansprüche 1 bis 31, ***dadurch gekennzeichnet***, daß es sich dabei um eine Mähmaschine mit oder ohne Glieder (34) zur Behandlung des Schnittgutes handelt.
